# EUROPEAN PATENT APPLICATION

(11) **EP 4 711 241 A1**
(43) Date of publication of application: **18.03.2026**
(21) Application number: 24200117.0
(22) Date of filing: 12.09.2024
(51) Int. Cl.: B62D 5/06, B62D 5/04

(54) **METHOD AND SYSTEM FOR DEGRADATION DETECTION OF A POWER STEERING SYSTEM**

(71) Applicant: KB Intellectual Property GmbH & Co. KG, 82049 Pullach (DE)
(72) Inventor: GYURKO, Zoltán, 1047 Budapest (HU); NEMETH, Huba, 1116 Budapest (HU); STRAUB, Kornel, 2013 Pomáz (HU); TOTH, Zoltan, 1046 Budapest (HU); TOTH, Janos, 6000 Kecskemét (HU); SINKA, Örs, 6000 Kecskemét (HU); NASZEK, Attila, 1112 Budapest (HU); FERENCZ, Jozsef Zsolt, 1135 Budapest (HU); HOLLOSI, Mate, 1097 Budapest (HU)

(57) **Abstract**

The present invention refers to a method for detection a degradation of a power steering system (100), the method comprising determining at least one actual response parameter of the system depending on steering input parameters and comparing the at least one actual response parameter of the system to at least one nominal response parameter of the system. Further, the present invention refers to a steering system.

## Description

The present invention refers to a method and a system for degradation detection of a power steering system.

According to usual techniques, it is known that the steering system degrades over time and that servicing a power steering system is necessary over lifetime of the system.

In particular in case of heavy commercial vehicle power steering systems, the degradation of hydraulics can lead to the loss of servo effect (e.g., electrohydraulic power steering) or even to the loss of steering ability of the vehicle. Thus, an early detection of the degradation is crucial.

Being aware that the hydraulics become degraded, suitable counter-measures can be initiated and activated. However, hydraulic steering systems operate dynamically such that a speed of a demand controlled hydraulic pump changes in a wide range depending on the steering wheel rotation dynamic.

EP 2 039 939 B2 discloses a method involving detecting or calculating performance-based sizes of a functional unit automatically in time intervals. The performance-based sizes of a functional unit are compared with each other or with pre-set values. A corresponding signal is generated depending on the comparison. The energy conversion device consists of multiple functionally interrelated functional units. The document further discloses that it is not necessary to approach the same operating point for a comparative measurement. Rather, a multi-dimensional model surface curve that is dependent on the power of a functional unit is determined and stored on the basis of several operating points and such a surface curve is determined and stored again at time intervals and compared with the or a previously determined surface curve, whereby the distance between the surface curves at a predetermined operating point or operating range or the volume between the surface curves is then used as a measure of the change in efficiency. Such an evaluation is particularly advantageous as it can be carried out during continuous operation without any intervention in the operating behavior of the machine. Thus, this method can be implemented for centrifugal pump units, such as those used as heating circulation pumps, which usually run at constantly changing operating points. Consequently, the method is suitable for a pump with a limited number of discrete working points, which is, however, not the case for a hydraulic system/pump of a steering system.

KR 10 2004 017 744 A discloses a power steering device capable of detecting a steering angle that is provided to detect left and right directions of a steering shaft in the left and right rotations of a steering shaft by using a plurality of hydraulic measuring sensors and accordingly to improve reliability for detecting the rotation angle of the steering shaft.

It is an object of the invention to provide a method and a system for monitoring and/or detecting a degradation of a steering system, preferably in an early stage.

These objectives are resolved by a method according to independent claim 1 and concerning a system by independent claim 11. Preferred embodiments are addressed by the dependent claims respectively.

According to the present invention a method is provided for detection a degradation of a power steering system for a vehicle, in particular an electrohydraulic power steering system, with an electronically driven pump, the method comprising the following steps:
- determining at least one actual response parameter of the system depending on at least one steering input parameter;
- comparing the at least one actual response parameter of the system to at least one nominal response parameter of the system.

The present invention is based on the idea to detect a degradation of a hydraulic steering system in an early stage during its use. The invention is further based on the idea that with increasing degradation of the system a deviation of the response of the system increases.

For a set of input parameters a nominal response might be stored, such that a detection is possible even for frequently changing operating points of the system and in particular of the electronically driven pump.

The input parameters are in particular parameters, which might be inherent to the system, measured parameters or read-out parameters.

A power steering system might comprise a steering wheel, which a user can turn to induce a steering signal/command, wherein the steering signal/command is an input for a controller, an electric motor that receives a control signal, a hydraulic pump, in particular electronically driven pump, that is driven by the electric motor and an a hydraulic actuator, wherein the hydraulic actuator actually induces the motion of the steered wheel or road wheel, that is to be turned in accordance with the steering signal/command.

The steering system may further comprise sensors for determining the state of the electric motor or hydraulic pump or hydraulic actuator, which are an input parameter for a controller of the system. The system may further include hydraulic lines and valves as well as a hydraulic tank/reservoir.

Thus, by the method according to the present invention a degradation monitoring can be implemented, in particular in the context of steering systems like a steer-by-wire system comprising hydraulic systems with hydraulic pumps and/or the like.

According to one preferred embodiment the method further comprises the following steps:
- calculating at least one difference value between the at least one actual response parameter and the at least one nominal response parameter;
- comparing the at least one difference value with at least one threshold value;
- determining whether the at least one difference value is above or below the at least one threshold value, in particular at least one pre-determined threshold value.

Thus, the method comprises calculating a difference for determining whether the response is above or below a threshold.

Such a threshold might be set, for example, according to fluctuations of the systems or measurement errors in the determination of the input parameters.

Moreover, the at least one threshold value can also comprise/refer to a threshold value range, in particular to provide a certain tolerance range.

According to one preferred embodiment the method further comprises the step of calculating the at least one difference value several times and determining whether the at least one difference value is stable over time or instable over time, in particular increases over time.

Thus, the method comprises calculating a difference for several times and determining whether the response is stable over time or increases/decreases.

According to one preferred embodiment the at least one nominal response parameter is based on at least one initial actual response parameter, in particular at least one stored initial response parameter being stored by a service user input or being stored during an initial learning process of the power steering system.

Preferably, the nominal response is a stored initial actual response, in particular the stored initial response might be stored by a service user input or might be stored during an initial learning process.

In the context of the present invention the nominal response may be a continuous or nearly continuous data set in order to allow an assessment of the degradation of the system, in particular independent from a limited number of discrete and pre-determined working points.

In another preferred embodiment, the at least one nominal response parameter is provided by and/or based on at least one simulated system response, in particular a simulated system response of the steering system being preferably provided by a controller of the steering system.

Hence, alternatively the nominal response can be a simulated response.

According to one preferred embodiment the at least one simulated system response is based on one or more of the following input parameters:
- phase currents, torque, position and/or rotations per minute of electric motor;
- hydraulic pressure in multiple position of the hydraulic circuit; and/or
- temperature of hydraulic oil.

Hence, the simulation can take into account one or more of such input parameters of the associated steering system.

These parameters are parameters which can be read out or detected in the system and are available for comparing a simulated response to an actual response. However, it might be suitable for an efficient system to take into account only some of these parameters having a larger impact on the result.

According to one preferred embodiment the at least one simulated system response is provided on basis of a numerical model of the power steering system comprising: hydraulic pump parameter, hydraulic actuator parameter, pre-pressure tank/hydro accumulator parameter, hydraulic lines parameter and/or hydraulic valves parameter.

Thus, the simulation can be performed on a model of the hydraulic system comprising: a hydraulic pump (hPump), an a hydraulic actuator (hActuator), pre-pressure tank/hydro accumulator, hydraulic lines and hydraulic valves.

According to one preferred embodiment the at least one actual response parameter comprises a displacement and/or a rotation of a steering actuator's output.

Namely, the actual response comprises the displacement and/or rotation of the steering actuator's output.

According to one preferred embodiment the at least one actual response parameter comprises a speed and/or an angular velocity of a steering actuator's output.

Hence, the response can comprise the speed and/or angular velocity of steering actuator's output.

According to one preferred embodiment the method further comprises the step of providing a degradation warning to the user of the system in a human perceptible form and/or initiating an emergency condition of the steering system and/or the vehicle, preferably by executing an emergency stop of the vehicle, whereby the degradation warning is preferably provided in form of a warning lamp activation and/or a warning sound activation.

Namely, method can further comprise outputting a degradation warning to the user of the system, the warning may comprise a warning lamp activation for the driver from maintenance or emergency stop and optionally comprise a warning sound activation.

For the method several thresholds may be defined which relates to different preferred service or maintenance actions and a warning may be related to a predetermined threshold in order to give the user or a service technician an indication which measure is to be taken.

According to another aspect of the invention a steering system for a vehicle, in particular electrohydraulic power steering system, is provided with at least one electronically driven pump, at least one hydraulic actuator and at least one controller configured to perform the method according to the present invention.

In particular, the system can comprise e.g. a steering wheel, which a user can turn to induce a steering signal/command, wherein the steering signal/command is an input for a controller.

Moreover, the system can be considered to further comprise an electric motor that receiving a control signal and/or a hydraulic pump, in particular electronically driven pump, that is driven by the electric motor and a hydraulic actuator, wherein the hydraulic actuator actually induces the motion of the steered wheel or road wheel, that is to be turned in accordance with the steering signal/command.

In addition, the controller of the steering system can be provided with a processor and a storage medium, in particular to execute a simulation process for the steering system, preferably based on a corresponding simulation/numerical model and/or by applying machine/deep learning algorithms, e.g. in form of neural nets or the like.

Hence, the controller of the steering system itself can either provide infrastructure to execute simulations and/or store e.g. nominal response parameters, threshold values, etc. by itself. Alternatively or additionally, the controller can also be provided with communication means in order to connect to external entities, like external storage mediums, external processing units, cloud services and/or the like.

All of the advantages and technical effects being described in the context of the method can also be applied, individually or commonly, for the system according to the present invention.

Further details and advantages of the present invention are explained and described in more detail in the context of the embodiment as illustrated by the enclosed figures.

It is schematically shown:
- Fig. 1: an illustration of an embodiment of a steering system, and
- Fig. 2: a block diagram of an embodiment of the method for detection of a steering system's degradation.

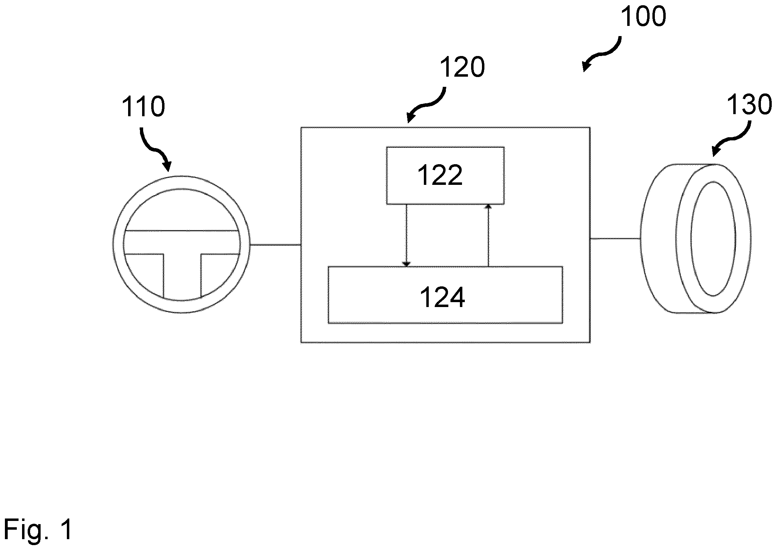

Fig. 1 schematically depicts a steering system 100.

The steering system 100 comprises a steering wheel 110, an electrohydraulic system 120 and a road wheel 130.

The electrohydraulic system 120 is interposed between the steering wheel 110 and the road wheel 130.

According to Fig. 1, the electrohydraulic system 120 can comprise a controller 122 as well as the actuation components 124 comprising a hydraulic pump, a hydraulic actuator and an electric motor. The actuation components can actually steer the road wheel.

The status of the components can be determined by one or more sensors, wherein the sensor signals are communicated to the controller 122. Control signals can be communicated back from the controller 122 to the actuation components 124.

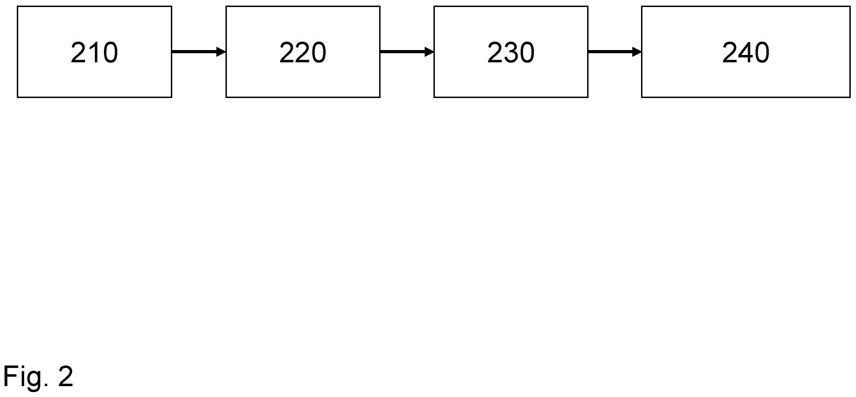

The controller 122 is able to perform the method of the present invention as illustrated in Fig. 2.

Thus, an actual system response, namely at least one actual response parameter, is determined 210 based on the sensor signals. The controller 122 compares the actual system response to a nominal system response 220, namely at least one nominal response parameter, based on the steering input parameters.

The actual response can be e.g. the displacement and/or rotation or the steering actuator output and additionally or alternatively the speed or angular velocity of the steering actuator's output.

A deviation between the actual response and the nominal response is determined and evaluated 230.

For example, if the deviation is above a predetermined threshold (range), a warning message can be output 240, which might be for example a warning lamp, indicating the user to schedule a service appointment. Alternatively, an emergency stop can be initiated via the steering system and/or the vehicle.

In summary, by the present invention a method can be provided which allows for an easy, effective and early surveillance of the status of the hydraulic components of the steering system 100, in order to avoid a sudden loss of the servo effect or even of the steering capability of the (commercial) vehicle.

### REFERENCE SIGNS

- 100: Power steering system
- 110: Steering wheel
- 120: Electrohydraulic system
- 122: Controller
- 124: Components
- 130: Road wheel
- 210: Detect an actual system response
- 220: Compare to nominal response
- 230: Determine a deviation
- 240: If the deviation is above a threshold, output warning message

## Claims

1. Method for detection a degradation of a power steering system (100) of a vehicle, in particular an electrohydraulic power steering system, with an electronically driven pump, the method at least comprising the following steps:
- determining at least one actual response parameter of the system (100) depending on at least one steering input parameter;
- comparing the at least one actual response parameter of the system to at least one nominal response parameter of the system (100).

2. Method according to claim 1,
**characterized in that**
the method further comprises the following steps:
- calculating at least one difference value between the at least one actual response parameter and the at least one nominal response parameter;
- comparing the at least one difference value with at least one threshold value;
- determining whether the at least one difference value is above or below the at least one threshold value, in particular at least one pre-determined threshold value.

3. Method according to one of the preceding claims,
**characterized in that**
the method further comprises the step of calculating the at least one difference value several times and determining whether the at least one difference value is stable over time or instable over time, in particular increases over time.

4. Method according to one of the preceding claims,
**characterized in that**
the at least one nominal response parameter is based on at least one initial actual response parameter, in particular at least one stored initial response parameter being stored by a service user input or being stored during an initial learning process of the power steering system (100).

5. Method according to one of the preceding claims,
**characterized in that**
the at least one nominal response parameter is provided by and/or based on at least one simulated system response, in particular a simulated system response of the steering system (100) being preferably provided by a controller of the steering system (100).

6. Method according to claim 5,
**characterized in that**
the at least one simulated system response is based on one or more of the following input parameters:
- phase currents, torque, position and/or rotations per minute of electric motor;
- hydraulic pressure in multiple position of the hydraulic circuit; and/or
- temperature of hydraulic oil.

7. Method according to one of the claims 4 or 5,
**characterized in that**
the at least one simulated system response is provided on basis of a numerical model of the power steering system (100) comprising: hydraulic pump parameter, hydraulic actuator parameter, pre-pressure tank/hydro accumulator parameter, hydraulic lines parameter and/or hydraulic valves parameter.

8. Method according to one of the preceding claims,
**characterized in that**
the at least one actual response parameter comprises a displacement and/or a rotation of a steering actuator's output.

9. Method according to one of the preceding claims,
**characterized in that**
the at least one actual response parameter comprises a speed and/or an angular velocity of a steering actuator's output.

10. Method according to one of the preceding claims,
**characterized in that**
the method further comprises the step of providing a degradation warning to the user of the system in a human perceptible form and/or initiating an emergency condition of the steering system (100) and/or the vehicle, preferably by executing an emergency stop of the vehicle,
whereby the degradation warning to the user is preferably provided in form of a warning lamp activation and/or a warning sound activation.

11. Steering system for a vehicle, in particular electrohydraulic power steering system, with at least one electronically driven pump, at least one hydraulic actuator and at least one controller configured to perform the method according to one of the preceding claims.
